# EUROPÄISCHE PATENTSCHRIFT

(11) **EP 2 367 764 B1**
(45) Veröffentlichungstag und Bekanntmachung des Hinweises auf die Patenterteilung: **25.04.2012**
(21) Anmeldenummer: 09771738.3
(22) Anmeldetag: 01.12.2009
(51) Int. Cl.: C02F 1/32

(54) **VERFAHREN ZUM ENTKEIMEN VON FLÜSSIGKEITEN UND FLÜSSIGKEITSENTKEIMUNGSVORRICHTUNG**
METHOD FOR STERILIZING LIQUID AND LIQUID STERILIZATION DEVICE
PROCÉDÉ ET DISPOSITIF DE DÉSINFECTION DE LIQUIDES

(30) Priorität: 02.12.2008 DE 102008044292
(43) Veröffentlichungstag der Anmeldung: 28.09.2011
(73) Patentinhaber: Brita GmbH, 65232 Taunusstein (DE)
(72) Erfinder: KEMMER, Ron, 97877 Wertheim (DE); CONRADT, Berthold, 65205 Wiesbaden (DE)
(74) Vertreter: van Lookeren Campagne, Constantijn August
(86) Internationale Anmeldenummer: PCT/EP2009/066157
(87) Internationale Veröffentlichungsnummer: WO 2010/063722

(56) Entgegenhaltungen:
- WO-A2-00/78678
- DE-A1- 3 840 276
- DE-A1- 3 924 350
- DE-A1- 19 736 636
- US-A1- 2002 162 969
- US-A1- 2005 156 119
- US-A1- 2008 156 738

## Beschreibung

Die Erfindung betrifft ein Verfahren zum Entkeimen von Flüssigkeiten gemäß dem Oberbegriff des Anspruchs 1. Die Erfindung betrifft auch eine Flüssigkeitsentkeimungsvorrichtung gemäß dem Obergriff des Anspruchs 8, sowie die Verwendung einer solchen Vorrichtung.

Wasserentkeimungsvorrichtungen werden auch in Kühlgeräte integriert, um vom Kühlgerät geliefertes gekühltes Wasser zu entkeimen. Hierbei kommt es darauf an, dass das gekühlte Wasser durch die Entkeimungsvorrichtung nicht erwärmt wird. Andererseits kühlt das kalte, durch die Reaktionskammer strömende Wasser die Umgebung der Reaktionskammer und somit auch die in der Nähe der Reaktionskammer befindliche UV-Lampe ab. Solange die UV-Lampe jedoch in Betrieb ist, tritt auch keine funktionsbeeinträchtigende Abkühlung der UV-Lampe auf.

Das Wasser wird bei derartigen Einrichtungen in der Regel portionsweise entnommen, um z. B. nacheinander Trinkgläser zu füllen. Nach Beendigung des jeweiligen Entnahmevorgangs verbleibt gekühltes Wasser in der Reaktionskammer, damit dieses für den nächsten Zapfvorgang sofort zur Verfugung steht. Das dem Volumen der Reaktionskammer entsprechende Wasservolumen kühlt u. a. die UV-Lampe ab, wenn diese nur während des Entnahmevorgangs betrieben wird. Die Lampentemperatur fällt je nach Wassertemperatur daher relativ schnell ab, so dass bei einem kurz danach einsetzenden erneuten Zapfvorgang die UV-Lampe entweder nicht einsatzbereit ist oder die Bereitstellung der notwendigen UV-Leistung für die Entkeimung zu lange dauert.

Bei längeren Zapf- oder Entnahmepausen stellt sich in der Regel dieses Problem nicht, weil sich die zunächst abgekühlte UV-Lampe, ebenso wie das gekühlte Wasser in der Reaktionskammer, allmählich bis auf die Umgebungstemperatur, d. h. in der Regel auf die Raumtemperatur (RT = 20 °C) erwärmen, so dass bei einem dann einsetzenden Zapfvorgang die UV-Lampe in der Regel ihre Starttemperatur besitzt.

Die Starttemperatur der UV-Lampe liegt dann vor, wenn die UV-Lampe nach dem Einschalten in der Lage ist, ihre vorgesehene UV-Leistung innerhalb von 30 sec zu erreichen. Die Starttemperatur der UV-Lampe liegt üblicherweise im Bereich von 15°C bis 20 °C.

Die DE 197 36 636 A1 offenbart eine Einrichtung zum Entkeimen von Wasser, die in einem vom Wasser durchströmten Gehäuse eine UV-Lampe umfasst, welche das durchströmende Wasser bestrahlt. Die UV-Lampe wird von einer Energieversorgungsschaltung mit Strom gespeist. Die Energieversorgungsschaltung ihrerseits wird von einer Steuerelektronik angesteuert, welche außerdem der Ansteuerung einer Ventiltreiberschaltung für ein in der Zuführleitung des Frischwassers liegendes Magnetventil dient. Erhält die Steuerelektronik ein Signal, welches das Einschalten der Energieversorgungsschaltung für die UV-Lampe herbeiführen soll, so aktiviert sie die Energieversorgungsschaltung sofort, die Ventiltreiberschaltung dagegen mit einer gewissen Verzögerung. Hierdurch wird gewährleistet, dass die UV-Lampe bereits ihre volle Strahlungsleistung erreicht hat, wenn das Magnetventil öffnet.

Die DE 38 40 276 A1 beschreibt eine Einrichtung zur Behandlung von Trinkwasser mit einem Sockel, auf dem wenigstens zwei in Bezug auf die Durchströmung hintereinander geschaltete, durch Rohrleitungen verbundene Behandlungskammern angeordnet sind. Als Behandlungskammer ist eine im Wesentlichen drucklos durchströmte, mit einem eingetauchten Ultra-Violett-Strahler versehene Entkeimungskammer vorgesehen. Zur Einleitung einer Entnahme wird zunächst einmal der UV-Strahler eingeschaltet. Über eine vorgegebene Zeit wir der Inhalt in der mit dem UV-Strahler versehenen letzten Behandlungskammer dem UV-Licht ausgesetzt, und somit eine weitgehende Keimfreiheit gewährleistet. Nach Ablauf dieser vorgegebenen Zeit öffnet ein Sperrventil, so dass das zulaufende Wasser die bereits in einer Filterkammer enthaltene Wassermenge in die mit dem UV-Strahler versehene Entkeimungskammer drückt. Der Entnahmevorgang ist dann beendet, wenn der mengenmäßige Austausch stattgefunden hat. Die Betriebsweise ist hierbei zweckmäßigerweise ferner so ausgelegt, dass über eine zusätzliche Zeitschalteinrichtung dafür Sorge getragen ist, dass der UV-Strahler erst in zeitlichem Abstand nach Schließen des Sperrventils abgeschaltet wird.

Die DE 39 24 350 A1 offenbart einen Schaltkreis für ein insbesondere einen koaxial in einem Entkeimungsrohr angeordneten UV-Strahler aufweisendes UV-Wasserentkeimungsgerät. In einer Wasserzulaufleitung ist zwischen einem Wasserabsperrventil und einem Wasserauslauf ein Druckschalter angeordnet. Stromab des Druckschalters ist ein Magnetventil, welches durch den Druckschalter über ein Schaltelement schaltbar ist, angeordnet. Der Schaltkreis umfasst ein Schaltelement, welches nach Beendigung eines Wasserentnahmevorgangs und bei dadurch geschlossenem Magnetventil den UV-Strahler noch für eine kurze, einstellbare Zeitspanne in Betrieb hält.

Aufgabe der Erfindung ist es, ein Verfahren zum Entkeimen von Flüssigkeiten anzugeben, bei dem die UV-Lampe bei jedem Flüssigkeitsentnahmevorgang wenigstens ihre Starttemperatur aufweist, ohne dass die UV-Lampe im Dauerbetrieb gefahren werden muss, was einen unnötigen Energieverbrauch zur Folge hätte.

Diese Aufgabe wird mit einem Verfahren gemäß Anspruch 1 gelöst.

Es hat sich gezeigt, dass es nicht erforderlich ist, die UV-Lampe über die gesamte Entnahmepause ständig zu betreiben, wodurch unnötig

Energie verbraucht werden würde, weil ständig dieselbe Flüssigkeitsmenge bestrahlt werden würde.

Es reicht aus, die UV-Lampe nach der Entnahme einer Wasserportion, d. h. nach dem Zapfvorgang, lediglich für eine bestimmte Zeitspanne Δt₁ weiter zu betreiben.

Diese Zeitspanne Δt₁ wird so gewählt, dass das in der Reaktionskammer verbliebene Flüssigkeitsvolumen vorzugsweise derart erwärmt wird, dass eine dauerhafte Abkühlung der UV-Lampe unter ihre Starttemperatur verhindert wird. Es ist deshalb vorgesehen, dass die Zeitspanne Δt₁ derart gewählt wird, dass das in der Reaktionskammer zurückgehaltene Flüssigkeitsvolumen auf mindestens die Starttemperatur der UV-Lampe erwärmt wird.

Da diese Starttemperatur in der Regel im Bereich der Raumtemperatur liegt, reicht es aus, dass die Zeitspanne Δt₁ derart gewählt wird, dass das in der Reaktionskammer zurückgehaltene Flüssigkeitsvolumen auf mindestens Raumtemperatur erwärmt wird.

Vorzugsweise wird als Flüssigkeit Wasser entkeimt. Die Flüssigkeit weist eine Temperatur unter .der Starttemperatur der UV-Lampe und unter der Raumtemperatur (RT = 20°C) auf. Es werden Flüssigkeiten mit einer Temperatur ≤ 12°C, bevorzugt ≤ 7°C entkeimt. Als weitere Ausführungsform kann Wasser mit Zusätzen entkeimt werden.

Es ist deshalb bevorzugt, die Zeitspanne Δt₁ umso langer zu wählen, je niedriger die Temperatur der zu entkeimenden Flüssigkeit ist.

Der Weiterbetrieb der UV-Lampe für eine Zeitspanne Δt₁ reicht aus, wenn die Starttemperatur der Lampe in etwa der Umgebungstemperatur der Flüssigkeitsentkeimungsvorrichtung entspricht.

Für den Fall, dass die Umgebungstemperatur der Flüssigkeitsentkeimungsvorrichtung unter der Raumtemperatur (RT = 20°C) bzw. unter der Starttemperatur der UV-Lampe liegen sollte und die Entnahmepausen relativ lang sind, kühlt sich die UV-Lampe im Laufe der Zeit auf die Umgebungstemperatur ab. Für diese Fälle ist es bevorzugt, wenn die UV-Lampe zwischen der Entnahme von zwei Flüssigkeitsportionen mindestens während einer weiteren Zeitspanne Δt₂ betrieben wird.

Bei langen Entnahmepausen ist es empfehlenswert, die UV-Lampe immer wieder für eine Zeitspanne Δt₂ zu betreiben, um sicherzustellen, dass bei jedem nachfolgenden Entnahmevorgang die UV-Lampe mindestens ihre Starttemperatur aufweist.

Es ist hierbei von Vorteil, wenn die Lampentemperatur gemessen wird und mindestens das Einschalten der UV-Lampe zum Betrieb der UV-Lampe während der Zeitspanne Δt₂ in Abhängigkeit von der Lampentemperatur vorgenommen wird.

Auch die Länge der Zeitspanne Δt₁ und/oder der Zeitspanne Δt₂ kann in Abhängigkeit von der gemessenen Lampentemperatur gesteuert werden. Dieses Verfahren hat den Vorteil, dass bei sich unter Umständen ändernden Umgebungsbedingungen sowohl die Anzahl der Zeitspannen Δt₂ als auch die Längen der Zeitspannen Δt₁ und/oder Δt₂ entsprechend angepasst werden können.

Bei minimalem Energieaufwand wird auf diese Weise sichergestellt, dass die UV-Lampe immer betriebsbereit ist.

Die Aufgabe wird mit einer Flüssigkeitsentkeimungsvorrichtung gemäß Anspruch 8 gelöst.

Gemäß einer weiteren Ausführungsform ist die Schalteinrichtung derart ausgebildet, dass sie zwischen der Entnahme von zwei Flüssigkeitsportionen die UV-Lampe mindestens während einer weiteren Zeitspanne Δt₂ betreibt.

Es ist vorzugsweise mindestens ein Temperatursensor vorgesehen. Der Temperatursensor ist vorzugsweise an der UV-Lampe zur Messung der Lampentemperatur angeordnet ist.

Dieser Temperatursensor oder ein weiterer Temperatursensor kann auch ein Bimetallelement zur Messung der Umgebungstemperatur sein. Das Bimetallelement ist vorzugsweise in der Schalteinrichtung und/oder Regeleinrichtung angeordnet. Wenn allerdings die Schalt- und/oder Regeleinrichtung selbst eine hohe Wärmeentwicklung zeigt, ist es bevorzugt, das Bimetallelement außerhalb der Schalt- und/oder Regeleinrichtung vorzusehen.

Vorzugsweise ist das Volumen der Reaktionskammer < dem Volumen einer Flüssigkeitsportion. Dies hat den Vorteil, dass das Flüssigkeitsvolumen, das sich bei längeren Standzeiten in der Reaktionskammer befindet und dort auf Raumtemperatur erwärmt wird, beim nachfolgenden Zapfvorgang von gekühltem Wasser nur einen kleinen Beitrag zum Gesamtvolumen der Flüssigkeitsportion liefert. Insgesamt kann dadurch eine gekühlte Flüssigkeitsportion bereitgestellt werden.

Vorzugsweise wird die Flüssigkeitsentkeimungsvorrichtung in einem Kühlgerät oder in Verbindung mit einem Gerät zur Abgabe von gekühlter Flüssigkeit, insbesondere gekühltem Wasser verwendet.

In der nachfolgenden Figur ist schematisch eine Flüssigkeitsentkeimungsvorrichtung 1 dargestellt, die über einen Anschluss 5 an eine Wasserleitung angeschlossen werden kann. Das zugeführte Wasser gelangt über ein Ventil 6 in eine Reaktionskammer 4 wo das Wasser von einer UV-Lampe 2 bestrahlt und somit entkeimt wird. Das entkeimte Wasser verlässt über einen Auslass 7 die Wasserentkeimungsvorrichtung 1. Der Auslass 7 kann mit einem Taster oder dergleichen versehen, um den Zapfvorgang zu starten.

Das Ventil 6 und der Auslass 7 sind Bestandteile der Zapfeinrichtung 10, die an eine Schalt und/oder Regeleinrichtung 3 angeschlossen sind. Zum Auslösen des Zapfvorgangs wird am Auslass 7 der Taster betätigt, woraufhin die Schalt- und/oder Regeleinrichtung 3 das Ventil 6 öffnet, damit aus der Wasserleitung über den Anschluss 5 Wasser zufließen kann. Nach Beendigung des Zapfvorgangs wird das Ventil 6 von der Schalt- und/oder Regeleinrichtung 3 geschlossen.

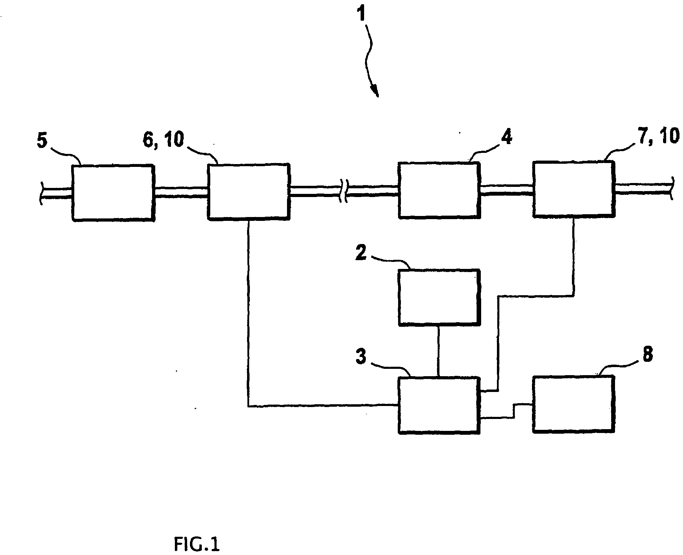

Ferner ist ein Temperatursensor 8 vorgesehen, der ebenfalls an die Schalt- und/oder Regeleinrichtung 3 angeschlossen ist. Nach der Beendigung des Zapfvorgangs betreibt die Schalt- und/oder Regeleinrichtung die UV-Lampe 2 über die Zeitspanne Δt₁ weiter. Die in der Figur dargestellte Schalt- und/oder Regeleinrichtung 3 ist auch zwischen zwei Entnahmen von flüssigkeitsportionen zum Betreiben der UV-Lampe 2 mindestens während einer weiteren Zeitspanne Δt₂ ausgebildet.

### Bezugszeichenliste

- 1: Flüssigkeitsentkeimungsvorrichtung
- 2: UV-Lampe
- 3: Schalt- und/oder Regeleinrichtung
- 4: Reaktionskammer
- 5: Anschluss
- 6: Ventil
- 7: Auslass
- 8: Temperatursensor
- 10: Zapfeinrichtung

## Patentansprüche

1. Verfahren zum Entkeimen von Flüssigkeiten, bei dem durch mindestens eine Reaktionskammer (4) strömende Flüssigkeitsportionen von mindestens einer UV-Lampe (2), die eine Starttemperatur von 15°C bis 20°C besitzt, bestrahlt und nach der Bestrahlung aus der Reaktionskammer (4) entnommen werden, **dadurch gekennzeichnet, dass** Flüssigkeit mit einer Temperatur unter der Starttemperatur der UV-Lampe (2) entkeimt wird, wobei die Temperatur der Flüssigkeit ≤ 12° C beträgt,
dass die UV-Lampe (2) nach der Entnahme einer Flüssigkeitsportion für eine Zeitspanne Δt₁ weiterbetrieben wird, und
dass die Zeitspanne Δt₁ derart gewählt wird, dass das in der Reaktionskammer (4) zurückgehaltene Flüssigkeitsvolumen auf mindestens die Starttemperatur der UV-Lampe (2) erwärmt wird.

2. Verfahren nach Anspruch 1, **dadurch gekennzeichnet, dass** die Zeitspanne Δt₁ umso länger gewählt wird, je niedriger die Temperatur der zu entkeimenden Flüssigkeit ist.

3. Verfahren nach einem der Ansprüche 1 oder 2, **dadurch gekennzeichnet, dass** die UV-Lampe (2) zwischen der
Entnahme von zwei Flüssigkeitsportionen mindestens während einer weiteren Zeitspanne Δt₂ betrieben wird.

4. Verfahren nach Anspruch 3, **dadurch gekennzeichnet, dass** die Lampentemperatur gemessen wird und dass mindestens das Einschalten der UV-Lampe (2) zum Betrieb der UV-Lampe (2) während der Zeitspanne Δt₂ in Abhängigkeit von der Lampentemperatur vorgenommen wird.

5. Verfahren nach einem der Ansprüche 1 bis 4, **dadurch gekennzeichnet, dass** die Lampentemperatur gemessen wird und dass die Länge der Zeitspanne Δt₁ und/oder die Länge der Zeitspanne Δt₂ in Abhängigkeit von der Temperatur der UV-Lampe (2) gesteuert wird.

6. Verfahren nach einem der Ansprüche 1 bis 5, **dadurch gekennzeichnet, dass** als Flüssigkeit Wasser oder Wasser mit Zusätzen entkeimt wird.

7. Verfahren nach einem der Ansprüche 1 bis 6, **dadurch gekennzeichnet, dass** das Volumen der Reaktionskammer (4) < dem Volumen einer Flüssigkeitsportion gewählt wird.

8. Flüssigkeitsentkeimungsvorrichtung (1) mit mindestens einer UV-Lampe (2), die eine Starttemperatur von 15°C bis 20°C besitzt, und mit mindestens einer von der Flüssigkeit durchströmten Reaktionskammer (4) sowie mit einer Zapfeinrichtung (10) zur Entnahme von Flüssigkeitsportionen, **dadurch gekennzeichnet,**
**dass** Flüssigkeit mit einer Temperatur unter der Starttemperatur der UV-Lampe (2) die Reaktionskammer (4) durchströmt, wobei die Temperatur der Flüssigkeit ≤ 12° C beträgt,
**dass** eine Schalt- und/oder Regeleinrichtung (3) vorgesehen ist, die an die Zapfeinrichtung (10) und an die UV-Lampe (2) angeschlossen ist, und dass die Schalt- und/oder Regeleinrichtung (3) nach dem Ausschalten der Zapfeinrichtung (10) die UV-Lampe (2) über eine Zeitspanne Δt₁ weiter betreibt, wobei die Zeitspanne Δt₁ derart gewählt ist, dass das nach dem Ausschalten der Zapfeinrichtung in der Reaktionskammer zurückgehaltene Flüssigkeitsvolumen auf mindestens die Starttemperatur der UV-Lampe erwärmt wird.

9. Vorrichtung nach Anspruch 8, **dadurch gekennzeichnet, dass** die Schalt- und/oder Regeleinrichtung (3) zwischen der Entnahme von zwei Flüssigkeitsportionen die UV-Lampe (2) mindestens während einer Zeitspanne Δt₂ weiter betreibt.

10. Vorrichtung nach Anspruch 8 oder 9, **dadurch gekennzeichnet, dass** mindestens ein Temperatursensor (8) vorgesehen ist.

11. Vorrichtung nach Anspruch 10, **dadurch gekennzeichnet, dass** der Temperatursensor (8) an der UV-Lampe (2) zur Messung der Lampentemperatur angeordnet ist.

12. Vorrichtung nach Anspruch 10, **dadurch gekennzeichnet, dass** der Temperatursensor (8) ein Bimetallelement zur Messung der Umgebungstemperatur ist.

13. Vorrichtung nach Anspruch 12, **dadurch gekennzeichnet, dass** das Bimetallelement in der Schalt- und/oder Regeleinrichtung (3) angeordnet ist.

14. Verwendung der Flüssigkeitsentkeimungsvorrichtung nach Anspruch 8 in einem Kühlgerät und/oder in Verbindung mit einem Gerät zur Abgabe von gekühlter Flüssigkeit.

## Claims

1. Method for sterilising liquids, in which portions of liquid flowing through at least one reaction chamber (4) are irradiated by at least one UV lamp (2) having a starting temperature of 15 °C to 20 °C, and are removed from the reaction chamber (4) after irradiation, **characterised in that** liquid is sterilised at a temperature below the starting temperature of the UV lamp (2), wherein the temperature of the liquid is ≤ 12 °C,
**in that** the UV lamp (2) continues to be operated for a period Δt₁ after removal of a liquid portion, and
**in that** the period Δt₁ is selected in such a way that the volume of liquid remaining in the reaction chamber (4) is heated to at least the starting temperature of the UV lamp (2).

2. Method according to claim 1, **characterised in that** the lower the temperature of the liquid to be sterilised is, the longer the period Δt₁ is selected to be.

3. Method according to any one of claims 1 and 2, **characterised in that** the UV lamp (2) is operated for at least a further period Δt₂ between the removal of two portions of liquid.

4. Method according to claim 3, **characterised in that** the lamp temperature is measured, and **in that** at least the switching on of the UV lamp (2) so as to operate the UV lamp (2) is carried out during the period Δt₂ in dependence on the lamp temperature.

5. Method according to any one of claims 1 to 4, **characterised in that** the lamp temperature is measured, and **in that** the length of the period Δt₁ and/or the length of the period Δt₂ is regulated in dependence on the temperature of the UV lamp (2).

6. Method according to any one of claims 1 to 5, **characterised in that** the sterilised liquid is water or water with additives.

7. Method according to any one of claims 1 to 6, **characterised in that** the volume of the reaction chamber (4) is selected to be less than the volume of a portion of liquid.

8. Liquid sterilisation device (1) comprising at least one UV lamp (2) having a starting temperature of 15 °C to 20 °C, and comprising at least one reaction chamber (4) through which the liquid flows, and comprising a dispensing device (10) for removing portions of liquid, **characterised in that** liquid flows through the reaction chamber (4) at a temperature below the starting temperature of the UV lamp (2), wherein the temperature of the liquid is ≤ 12 °C,
**in that** a switching and/or control device (3) is provided which is connected to the dispensing device (10) and to the UV lamp (2), and **in that** the switching and/or control device (3) continues to operate the UV lamp (2) for a period Δt₁ after switching off of the dispensing device (10), wherein the period Δt₁ is selected in such a way that the volume of liquid remaining in the reaction chamber after switching off of the dispensing device is heated to at least the starting temperature of the UV lamp.

9. Device according to claim 8, **characterised in that** the switching and/or control device (3) continues to operate the UV lamp (2) for at least a period Δt₂ between the removal of two portions of liquid.

10. Device according to either claim 8 or claim 9, **characterised in that** at least one temperature sensor (8) is provided.

11. Device according to claim 10, **characterised in that** the temperature sensor (8) is arranged on the UV lamp (2) to measure the lamp temperature.

12. Device according to claim 10, **characterised in that** the temperature sensor (8) is a bimetallic element for measuring the ambient temperature.

13. Device according to claim 12, **characterised in that** the bimetallic element is arranged in the switching and/or control device (3).

14. Use of the liquid sterilisation device according to claim 8 in a refrigeration appliance and/or in connection with an appliance for dispensing cooled liquid.

## Revendications

1. Procédé pour la désinfection de liquides, dans lequel des portions de liquide s'écoulant à travers au moins une chambre réactionnelle (4) sont exposées à au moins une lampe UV (2), qui possède une température initiale de 15 °C à 20 °C, et sont retirées de la chambre réactionnelle (4) après exposition, **caractérisé en ce que** le liquide est désinfecté à une température inférieure à la température initiale de la lampe UV (2), la température du liquide étant ≤ 12 °C,
la lampe UV (2) continue à fonctionner après retrait d'une portion de liquide sur une période de temps Δt₁, et
la période de temps Δt₁ est choisie de sorte que le volume de liquide retenu dans la chambre réactionnelle (4) soit chauffé à au moins la température initiale de la lampe UV (2).

2. Procédé selon la revendication 1, **caractérisé en ce que** la période de temps Δt₁ est choisie d'autant plus longue que la température du liquide à désinfecter est plus faible.

3. Procédé selon l'une quelconque des revendications 1 ou 2, **caractérisé en ce que** la lampe UV (2) fonctionne entre le retrait de deux portions de liquide au moins pendant une autre période de temps Δt₂.

4. Procédé selon la revendication 3, **caractérisé en ce que** la température de la lampe est mesurée et **en ce qu'**au moins la mise en marche de la lampe UV (2) pour le fonctionnement de la lampe UV (2) pendant la période de temps Δt₂ est effectuée en fonction de la température de la lampe.

5. Procédé selon l'une quelconque des revendications 1 à 4, **caractérisé en ce que** la température de la lampe est mesurée et **en ce que** la longueur de la période de temps Δt₁ et/ou la longueur de la période de temps Δt₂ est/sont commandée(s) en fonction de la température de la lampe UV (2).

6. Procédé selon l'une quelconque des revendications 1 à 5, **caractérisé en ce que** l'on désinfecte comme liquide de l'eau ou de l'eau avec des additifs.

7. Procédé selon l'une quelconque des revendications 1 à 6, **caractérisé en ce que** le volume de la chambre réactionnelle (4) est choisi inférieur au volume d'une portion de liquide.

8. Dispositif de désinfection de liquide (1) avec au moins une lampe UV (2), qui possède une température initiale de 15 °C à 20 °C, et avec au moins une chambre réactionnelle (4) parcourue par le liquide ainsi qu'avec un dispositif distributeur (10) pour le retrait de portions de liquide, **caractérisé en ce que**
le liquide à une température inférieure à la température initiale de la lampe UV (2) parcourt la chambre réactionnelle (4), la température du liquide étant ≤ 12 °C, l'on prévoit un dispositif de commutation et/ou de réglage (3), qui est raccordé au dispositif distributeur (10) et à la lampe UV (2), et le dispositif de commutation et/ou de réglage (3) continue, après l'arrêt du dispositif distributeur (10), à faire fonctionner la lampe UV (2) sur une période de temps Δt₁, dans lequel la période de temps Δt₁ est choisie de sorte que le volume de liquide retenu après l'arrêt du dispositif distributeur dans la chambre réactionnelle soit chauffé à au moins la température initiale de la lampe UV.

9. Dispositif selon la revendication 8, **caractérisé en ce que** le dispositif de commutation et/ou de réglage (3) continue, entre le retrait de deux portions de liquide, à faire fonctionner la lampe UV (2) au moins pendant une période de temps Δt₂.

10. Dispositif selon la revendication 8 ou 9, **caractérisé en ce que** l'on prévoit au moins un capteur de température (8).

11. Dispositif selon la revendication 10, **caractérisé en ce que** le capteur de température (8) est agencé sur la lampe UV (2) pour mesurer la température de la lampe.

12. Dispositif selon la revendication 10, **caractérisé en ce que** le capteur de température (8) est un élément bimétallique pour mesurer la température ambiante.

13. Dispositif selon la revendication 12, **caractérisé en ce que** l'élément bimétallique est agencé dans le dispositif de commutation et/ou de réglage (3).

14. Utilisation du dispositif de désinfection de liquide selon la revendication 8 dans un appareil de refroidissement et/ou en relation avec un appareil pour délivrer un liquide refroidi.
